# EUROPÄISCHE PATENTSCHRIFT

(11) **EP 2 768 661 B1**
(45) Veröffentlichungstag und Bekanntmachung des Hinweises auf die Patenterteilung: **08.07.2020**
(21) Anmeldenummer: 12783511.4
(22) Anmeldetag: 15.10.2012
(51) Int. Cl.: B30B 1/18, B30B 1/32, B30B 11/02, B30B 15/02, B30B 15/04

(54) **PRESSE**
PRESS
PRESSE

(30) Priorität: 21.10.2011 DE 102011116552
(43) Veröffentlichungstag der Anmeldung: 27.08.2014
(73) Patentinhaber: Maschinenfabrik Lauffer GmbH & Co. KG, 72160 Horb (DE)
(72) Erfinder: BEHNS, Holger, 22885 Barsbüttel (DE); PANNEWITZ, Thomas, 21514 Klein Pampau (DE)
(74) Vertreter: Späth, Dieter
(86) Internationale Anmeldenummer: PCT/EP2012/004304
(87) Internationale Veröffentlichungsnummer: WO 2013/056805

(56) Entgegenhaltungen:
- EP-A1- 1 952 975
- WO-A1-2008/104969
- DE-A1- 4 336 744
- FR-A1- 2 951 989
- JP-A- 2001 025 897

## Beschreibung

Die Erfindung betrifft eine Presse zur Herstellung eines Presslings aus pulverförmigem Material, beispielsweise Metall- oder Keramikpulver. Das pulverförmige Material wird in eine Formaufnahme einer Matrizeneinheit gefüllt und anschließend beispielsweise durch einen Oberstempel und einen Unterstempel in der Formaufnahme zu einem Pressling verpresst. Eine solche Presse ist beispielsweise bekannt aus EP 2 311 587 A1. Die bekannte Presse besitzt ein Pressengestell mit einem Pressenoberteil und einem Pressenunterteil und vertikalen Stützsäulen, die das Pressenoberteil und das Pressenunterteil miteinander verbinden. Für das Pressergebnis mit solchen Pressen sowie den Verschleiß der Presse ist eine möglichst präzise Ausrichtung sämtlicher während des Pressvorgangs im Kraftfluss befindlichen Bauteile von entscheidender Bedeutung. Bei der bekannten Presse ist eine Vielzahl von Bauteilen, die in der Regel einzeln gefertigt werden, und Bauteilebenen im Kraftfluss. Hierdurch addieren sich Fertigungstoleranzen und es kann aufgrund der hohen Presskräfte zu einem Verbiegen von Komponenten der Presse kommen. Insbesondere ist es möglich, dass die Achsen der oberen und unteren Antriebseinheiten zum Antreiben der Ober- und Unterstempel nicht präzise miteinander fluchten. Hierdurch kann es zu einem fehlerhaften Pressergebnis kommen. Um derartige Auswirkungen auf das Pressergebnis zu minimieren, ist vorgeschlagen worden, sogenannte Werkzeugflihrungsgestelle einzusetzen, die Ober- und Unterstempel sowie eine Matrizenplatte mit einer Formaufnahme umfassen. Sofern die Werkzeugführungsgestelle ausreichend dimensioniert sind, bleibt der Einfluss eines Verbiegens von Pressenbauteilen auf den Pressling vernachlässigbar. Dies führt allerdings zu einem erheblichen Mehraufwand hinsichtlich der Werkzeugfuhrungsgestelle. Außerdem kommt es während des Pressens zu einem erhöhten Verschleiß einzelner Bauteile, beispielsweise Dichtungen und Führungsbänder von Zylindern bei Hydraulikpressen, Spindel/Spindelmutter-Einheiten bei Spindelpressen oder Führungen der Werkzeugführungsgestelle.

Eine weitere Presse ist bekannt aus WO 2008/104969 A1. Diese Presse besitzt ein rahmenförmiges Pressengestell, bei dem eine obere und eine untere Rahmenplatte über mehrere randständige Streben, die parallel zu einer Längsachse des Pressengestells orientiert sind, miteinander verbunden sind. Zwischen der oberen und unteren Rahmenplatte ist eine senkrecht zur Längsachse ausgerichtete, mit dem Pressengestell fest verbundene Matrizenplatte angeordnet, in der sich eine Aufnahme zur Verpressung eines pulverförmigen Materials befindet. Ein Paar in Richtung der Längsachse orientierte Führungsstangen, die im Abstand voneinander jeweils im oberen und im unteren Bereich des Pressengestells an diesem fest angeordnet sind, durchdringen die Matrizenplatte sowie jeweils eine oberhalb und unterhalb der Matrizenplatte angeordnete, zur Aufnahme und Bewegung eines Pressstempels vorgesehene Pressanordnung, die auf den Führungsstangen verschieblich sind. Zwei im Abstand voneinander in der Matrizenplatte fest verankerte Gewindestangen greifen jeweils in eine zugeordnete Gewindemutter ein, die in der oberen und der unteren Pressanordnung drehbeweglich gelagert sind, wobei die beiden oberen und die beiden unteren jeweils von einem von der zugeordneten Pressanordnung getragenen Motor angetrieben sind. Über die an der Matrizenplatte befestigten Spindeltriebe, die paarweise synchronisiert von dem jeweils einen Motor betrieben werden, sind die obere und die untere Pressanordnung in vertikaler Richtung beweglich. Die Motoren zum Betätigen der Spindeltriebe werden somit bei jeder vertikalen Bewegung der Pressanordnung entsprechend mitbewegt. Die beim Verpressen des pulverförmigen Materials jeweils am oberen und unteren Pressstempel aufzubringende, als Aktionskraft fungierende Presskraft generiert jeweils eine Reaktionskraft, die über die paarweise ober- und unterhalb an der Matrizenplatte fest angeordneten Gewindestangen aufgenommen und in die Matrizenplatte abgetragen werden müssen. Dieser Aufbau erfordert eine erhebliche Dimensionierung der Matrizenplatte und auch der jeweiligen Pressanordnung, um die im Zuge des Pressens und im Zuge der hierbei erfolgenden Bewegung der oberen und unteren Pressanordnung auftretenden Kräfte und Momente aufzunehmen. Darüber hinaus ist für einen Austausch der Pressanordnungen mit ihren Pressstempeln eine weitgehende Demontage der Presse erforderlich, wobei über die dann auch erforderliche Austauschbarkeit der Aufnahme des pulverförmigen Materials in der Matrizenplatte keine Angaben gemacht werden.

Aus DE 43 36 744 A1 ist eine Presse für die Herstellung von Formlingen, insbesondere der Pulvermetallurgie oder der technischen Keramik, aus einer feinkörnigen Masse bekannt, bei der zwischen einem stationären Teil und einem vertikal beweglichen Bär Stützen angeordnet sind, auf denen Zugstangen angeordnet sind, die den Bär vertikal bewegen. Der Bär betätigt einen Pressstempel über zwei miteinander gekoppelte Querteile, wobei zwischen dem ersten Querteil und dem Bär ein Spindeltrieb mit Hohlzylinder angeordnet ist, über den die Hublänge des Pressstempels eingestellt wird.

Ausgehend von dem erläuterten Stand der Technik liegt der Erfindung die Aufgabe zugrunde, eine Presse der eingangs genannten Art bereitzustellen, mit der in konstruktiv einfacher Weise ein optimales Pressergebnis erreicht wird und gleichzeitig ein Austausch von Komponenten der Presse in einfacher Weise möglich ist.

Die Erfindung löst diese Aufgabe durch den Gegenstand von Anspruch 1. Vorteilhafte Ausgestaltungen finden sich in den abhängigen Ansprüchen, der Beschreibung und den Figuren.

Die Erfindung löst die Aufgabe durch eine Presse zur Herstellung eines Presslings aus pulverförmigem Material, umfassend einen Pressenrahmen mit einer oberen und einer unteren Halteplatte, die durch mehrere vertikale Abstandhalter miteinander verbunden sind und mit mindestens einem zwischen der oberen und unteren Halteplatte angeordneten Tragelement, weiter umfassend eine Werkzeugführungseinheit mit mindestens einer oberen Stempeleinheit mit mindestens einem oberen Pressstempel und/oder mit mindestens einer unteren Stempeleinheit mit mindestens einem unteren Pressstempel und mit einer Matrizeneinheit mit mindestens einer Aufnahme für durch den oberen und/oder unteren Pressstempel zu verpressendes pulverförmiges Material, wobei die Werkzeugführungseinheit an dem Tragelement angeordnet ist, und weiter umfassend mindestens eine obere Antriebseinheit zum Verfahren der oberen Stempeleinheit in vertikaler Richtung und/oder mindestens eine untere Antriebseinheit zum Verfahren der unteren Stempeleinheit und/oder der Matrizeneinheit in vertikaler Richtung, wobei die obere Antriebseinheit und/oder die untere Antriebseinheit sich im Betrieb derart an dem Tragelement abstützen, dass die Reaktionskräfte, die von den beim Verpressen des pulverförmigen Materials in der mindestens einen Aufnahme erzeugten Presskräften als Aktionskräften generiert werden, in das Tragelement eingeleitet werden.

Die erfindungsgemäße Presse besitzt einen Pressenrahmen mit einer oberen und unteren Halteplatte, die durch vertikale Abstandhalter verbunden sind und so einen Rahmen bzw. ein Gehäuse der Presse bilden. Über die untere Halteplatte steht die Presse mittels Füßen oder direkt auf dem Untergrund auf. Die Presse umfasst weiterhin eine Werkzeugführungseinheit, insbesondere ein Werkzeugsführungsgestell. Dieses besitzt eine oder mehrere obere und/oder untere Stempeleinheit(en) mit jeweils mindestens einem Ober- und/oder Unterstempel. Darüber hinaus besitzt die Werkzeugführungseinheit eine Matrizeneinheit mit einer Formaufnahme, in die zu verpressendes Pulver vor dem Verpressen durch den oder die Pressstempel gefüllt wird. Bei dem pulverförmigen Material kann es sich beispielsweise um Metall- oder Keramikpulver handeln. Die Matrizeneinheit ist insbesondere zwischen der oberen und unteren Stempeleinheit angeordnet. In der Regel umfasst die Presse mindestens einen Ober- und Unterstempel, die in der Aufnahme der Matrizeneinheit zum Verpressen des eingefüllten Pulvers zusammenwirken. Es ist jedoch grundsätzlich auch denkbar, eine Verpressung beispielsweise nur von oben mit nur einem Oberstempel vorzunehmen, wenn die Aufnahme der Matrizeneinheit einen geschlossenen Boden besitzt.

Die Matrizeneinheit kann eine Matrizenplatte aufweisen. Ebenso können die obere(n) und/oder die untere(n) Stempeleinheit(en) eine obere bzw. untere Stempelplatte umfassen. Es kann eine Ausrichteinheit für die Werkzeugführungseinheit vorgesehen sein, mit der diese beim Einsetzen in den Pressenrahmen zum Tragelement ausgerichtet wird. Zum vertikalen Bewegen der Ober- und/oder Unterstempel im Zuge des Pressvorgangs sind obere und/oder untere Antriebseinheiten vorgesehen. Grundsätzlich ist es möglich, mehr als eine, beispielsweise zwei, obere Antriebseinheiten und mehr als eine, beispielsweise zwei, untere Antriebseinheiten vorzusehen. Sind zwei obere Antriebseinheiten und/oder zwei untere Antriebseinheiten vorgesehen, können diese beispielsweise symmetrisch auf zwei einander gegenüberliegenden Seiten des Pressenrahmens angeordnet sein. Es ist jedoch auch denkbar, nur auf einer Seite eine Antriebseinheit vorzusehen und auf der gegenüberliegenden Seite eine Führungseinheit. Wie erläutert, kann die untere Antriebseinheit eine untere Stempeleinheit oder eine Matrizeneinheit in vertikaler Richtung antreiben. Es ist also ein Betrieb der Presse sowohl im Ausstoßverfahren möglich, bei der die Matrizeneinheit stationär ist und die Ober- und Unterstempel gegenüber der Matrizeneinheit verfahren werden, als auch im Abzugsverfahren, bei dem der Unterstempel stationär ist und die Matrizeneinheit sowie der Oberstempel verfahrbar sind. Grundsätzlich lässt sich bei der erfindungsgemäßen Presse die Anzahl der Pressachsen und damit der parallel hergestellten Presslinge in weiten Grenzen erhöhen.

Der Pressenrahmen der erfindungsgemäßen Presse weist ein zwischen den Halteplatten angeordnetes Tragelement auf. Das Tragelement kann beispielsweise im Wesentlichen mittig zwischen den Halteplatten angeordnet sein. Das Tragelement ist getrennt von der Matrizeneinheit bzw. einer Matrizenplatte der Matrizeneinheit ausgebildet und dazu geeignet, große Kräfte aufzunehmen. An dem Tragelement ist erfindungsgemäß die Werkzeugführungseinheit angeordnet. Außerdem stützen sich erfindungsgemäß die obere Antriebseinheit und/oder die untere Antriebseinheit im Betrieb an dem Tragelement ab, insbesondere direkt und zwar derart, dass die Reaktionskräfte, die von den beim Verpressen des pulverförmigen Materials in der mindestens einen Aufnahme erzeugten Presskräften als Aktionskräften generiert werden, zumindest zum überwiegenden Teil in das Tragelement eingeleitet werden. Im Zuge eines Pressvorgangs üben Ober- und Unterstempel eine erhebliche durch die obere und/oder untere Antriebseinheit erzeugte Presskraft auf das zu einem Pressling zu verpressende pulverförmige Material aus. Diese Presskraft erzeugt als Aktionskraft eine Reaktions- oder Gegenkraft, die wiederum über die Ober- und Unterstempel auf die obere und/oder Antriebseinheit wirkt. Diese über die Ober- und Unterstempel in die obere und/oder untere Antriebseinheit eingeleitete Reaktionskraft wird erfindungsgemäß also in das Tragelement geleitet. Die übrigen Teile des Pressenrahmens, insbesondere die vertikalen Abstandhalter zwischen den Halteplatten nehmen an diesem Kraftfluss im Wesentlichen nicht teil. Auch werden diese Kräfte nicht über die obere und/oder untere Antriebseinheit wieder in die Matrizeneinheit eingeleitet. Der erfindungsgemäße Pressenrahmen ist insbesondere ein säulenloser Pressenrahmen, bei dem die vertikalen Abstandhalter nicht zur Aufnahme hoher Presskräfte ausgelegt sein müssen. Da der Kraftfluss im Wesentlichen nicht über die vergleichsweise langen Säulen eines Pressenrahmens erfolgt, kommt es zu einer geringeren Auffederung der Presse. Ein Verbiegen des Pressenrahmens und die damit verbundenen unerwünschten Einflüsse auf das Pressergebnis werden weitgehend vermieden. Darüber hinaus befinden sich in vorteilhafter Weise nur wenige Komponenten der Presse im Kraftfluss. Hierdurch addieren sich nur wenige Bauteiltoleranzen. Die erfindungsgemäß im Kraftfluss befindlichen Komponenten, insbesondere der Tragrahmen, können in konstruktiv wenig aufwendiger Weise mit geringen Toleranzen gefertigt werden. Mit geringerem konstruktivem Aufwand als beim Stand der Technik lässt sich daher ein präzises Pressergebnis erzielen. Darüber hinaus ist die Gesamthöhe der Presse gering, da die Antriebseinheiten in den Pressenrahmen integriert werden können.

Die Matrizeneinheit und das Tragelement des Pressenrahmens sind in derselben oder einer geringfügig voneinander beabstandeten Anordnungsebene angeordnet. Bei der Anordnungsebene handelt es sich insbesondere um eine horizontale Ebene. Sowohl die Matrizeneinheit, insbesondere eine Matrizenplatte, als auch das Tragelement weisen in der Regel eine Ausdehnung in einer Richtung senkrecht zu der Anordnungsebene, insbesondere einer vertikalen Richtung, auf. Die Anordnungsebene kann dann beispielsweise mittig zu der vertikalen Ausdehnung der Matrizeneinheit, insbesondere der Matrizenplatte, bzw. des Tragelements liegen. Die Montageebene der Matrizeneinheit, insbesondere einer Matrizenplatte, kann bei dieser Ausgestaltung weiterhin weitgehend identisch mit der Montageebene der jeweiligen Antriebseinheit an dem Tragelement sein, wenn man als Montageebene der Antriebseinheit eine senkrecht zur Drehachse beispielsweise eines SpindelMutter-Systems der Antriebseinheit orientierte Ebene definiert. Hierdurch werden Verformungen der Pressenbauteile im Betrieb weiter vermieden. Die Matrizeneinheit, insbesondere eine Matrizenplatte, kann an dem Tragelement befestigt sein, insbesondere direkt. Hierdurch wird eine Verformung der Pressenbauteile weiter verringert.

Nach einer weiteren Ausgestaltung können die obere Antriebseinheit und/oder die untere Antriebseinheit an dem Tragelement befestigt sein, insbesondere direkt. Weiterhin ist es möglich, dass die obere Antriebseinheit zwischen dem Tragelement und der oberen Stempeleinheit und/oder die untere Antriebseinheit zwischen dem Tragelement und der unteren Stempeleinheit oder der Matrizeneinheit angeordnet sind. Die obere Antriebseinheit kann direkt oder über ein oberes Übertragungselement an der oberen Stempeleinheit befestigt sein und/oder die untere Antriebseinheit kann direkt oder über ein unteres Übertragungselement an der unteren Stempeleinheit oder der Matrizeneinheit befestigt sein..

Nach einer weiteren Ausgestaltung kann das obere Übertragungselement eine obere Übertragungsbrücke umfassen und/oder das untere Übertragungselement eine untere Übertragungsbrücke umfassen. Es ist dann weiter möglich, dass zwei obere Antriebseinheiten vorgesehen sind, die an der oberen Übertragungsbrücke befestigt sind und/oder dass zwei untere Antriebseinheiten vorgesehen sind, die an der unteren Übertragungsbrücke befestigt sind. Durch das Vorsehen von zwei Antriebseinheiten pro Pressachse können die jeweiligen Antriebe kleiner dimensioniert werden. Die beiden einer Pressachse zugeordneten Antriebseinheiten können gegenläufig betrieben werden mit dem Ziel, dass sich die Reaktionsdrehmomente, die sich aus den beiden Antriebsmomenten der Antriebe generieren, kompensieren und somit in der die Antriebe aufnehmenden Anordnung keine Verformungen bewirken. Eine diesbezügliche kompensatorische Wirkung wird erreicht, wenn die Gewindespindeln der gegenläufig betriebenen Antriebe entgegengesetzte Steigungswinkel aufweisen (recht- und linksgängiges Gewinde). Weiterhin kann zwischen der oberen Übertragungsbrücke und der oberen Stempeleinheit ein oberes Kraftübertragungselement angeordnet sein und/oder zwischen der unteren Übertragungsbrücke und der unteren Stempeleinheit oder der Matrizeneinheit ein unteres Kraftübertragungselement angeordnet sein.

Nach einer weiteren Ausgestaltung kann die obere Antriebseinheit mindestens einen durch mindestens einen elektrischen Motor angetriebenen oberen Spindeltrieb umfassen. Alternativ oder zusätzlich kann die untere Antriebseinheit mindestens einen durch mindestens einen elektrischen Motor angetriebenen unteren Spindeltrieb umfassen. Mit Spindeltrieben sind besonders hohe Kräfte präzise übertragbar. Mindestens ein elektrischer Motor des oberen Spindeltriebs kann dabei an der oberen Halteplatte des Pressenrahmens befestigt sein. Entsprechend kann mindestens ein elektrischer Motor des unteren Spindeltriebs an der unteren Halteplatte des Pressenrahmens befestigt sein. Dies hat den Vorteil, dass die Motoren bei einem Pressvorgang nicht bewegt werden und somit keine Massenkräfte auftreten. Das vergleichsweise hohe Gewicht der Motoren führt dann nicht zu unerwünschten Belastungen der zugeordneten Antriebseinheiten und damit der Stempeleinheiten, sondern wird über den Pressenrahmen aufgenommen. Natürlich müssen die Motoren nicht an den Halteplatten befestigt sein.

Gemäß einer weiteren Ausgestaltung kann ein oberes Festlager einer oberen Spindel mindestens eines oberen Spindeltriebs an dem Tragelement befestigt sein und eine obere Spindelmutter des mindestens einen oberen Spindeltriebs direkt oder über ein oberes Übertragungselement an der oberen Stempeleinheit befestigt sein. Alternativ oder zusätzlich kann ein unteres Festlager einer unteren Spindel mindestens eines unteren Spindeltriebs an dem Tragelement befestigt sein und eine untere Spindelmutter des mindestens einen unteren Spindeltriebs direkt oder über ein unteres Übertragungselement an der unteren Stempeleinheit und/oder der Matrizeneinheit befestigt sein. Bei dem oberen bzw. unteren Übertragungselement kann es sich beispielsweise um eine obere bzw. untere Übertragungsbrücke handeln. Bei Antriebseinheiten mit rotierenden Spindeln können die Spindeln mit ihrer Festlagerung (insbesondere direkt) an dem Tragelement montiert werden. Auf den Spindeln montierte Spindelmuttern können dann vorzugsweise über Übertragungsbrücken miteinander verbunden werden. Die Übertragungsbrücken können dann wiederum mit der Werkzeugführungseinheit, insbesondere einer oberen oder unteren Stempeleinheit bzw. einer Matrizeneinheit verbunden werden. Auch eine direkte Anbindung der Antriebseinheiten an die Stempeleinheiten bzw. Matrizeneinheit ist möglich. Ebenso ist eine direkte Anbindung der jeweiligen Übertragungsbrücke an die Stempeleinheiten bzw. die Matrizeneinheit ohne ein Kraftübertragungselement denkbar.

Der elektrische Motor kann ein Hohlwellenmotor sein. Es ist dann möglich, dass der Hohlwellenmotor an dem Tragelement befestigt ist und, dass der Hohlwellenmotor eine obere Spindelmutter des mindestens einen oberen Spindeltriebs antreibt, wobei eine obere Spindel des mindestens einen oberen Spindeltriebs direkt oder über ein oberes Übertragungselement an der oberen Stempeleinheit befestigt ist und/oder dass der Hohlwellenmotor eine untere Spindelmutter des mindestens einen unteren Spindeltriebs antreibt, wobei eine untere Spindel des mindestens einen unteren Spindeltriebs direkt oder über ein unteres Übertragungselement an der unteren Stempeleinheit und/oder der Matrizeneinheit befestigt ist. Weiter ist es möglich, dass der Hohlwellenmotor direkt oder über ein oberes Übertragungselement an der oberen Stempeleinheit befestigt ist und eine obere Spindelmutter des mindestens einen oberen Spindeltriebs antreibt, und dass eine obere Spindel des mindestens einen oberen Spindeltriebs an dem Tragelement befestigt ist und/oder dass der Hohlwellenmotor direkt oder über ein unteres Übertragungselement an der unteren Stempeleinheit und/oder der Matrizeneinheit befestigt ist und eine untere Spindelmutter des mindestens einen unteren Spindeltriebs antreibt, und dass eine untere Spindel des mindestens einen unteren Spindeltriebs an dem Tragelement befestigt ist. Auch ist es möglich, dass der Hohlwellenmotor an dem Tragelement befestigt ist und, dass der Hohlwellenmotor eine axial bewegliche obere Spindel des mindestens einen oberen Spindeltriebs rotativ antreibt, und dass ein oberes Festlager des mindestens einen oberen Spindeltriebs direkt oder über ein oberes Übertragungselement an der oberen Stempeleinheit befestigt ist und/oder dass der Hohlwellenmotor eine axial bewegliche untere Spindel des mindestens einen unteren Spindeltriebs rotativ antreibt, und dass ein unteres Festlager des mindestens einen unteren Spindeltriebs direkt oder über ein unteres Übertragungselement an der unteren Stempeleinheit und/oder der Matrizeneinheit befestigt ist. Schließlich ist es möglich, dass der Hohlwellenmotor direkt oder über ein oberes Übertragungselement an der oberen Stempeleinheit befestigt ist und eine axial bewegliche obere Spindel des mindestens einen oberen Spindeltriebs rotativ antreibt, und dass ein oberes Festlager des mindestens einen oberen Spindeltriebs an dem Tragelement befestigt ist und/oder dass der Hohlwellenmotor direkt oder über ein unteres Übertragungselement an der unteren Stempeleinheit und/oder der Matrizeneinheit befestigt ist und eine axial bewegliche untere Spindel des mindestens einen unteren Spindeltriebs rotativ antreibt, und dass ein unteres Festlager des mindestens einen unteren Spindeltriebs an dem Tragelement befestigt ist. In sämtlichen Fällen kann es sich bei dem oberen bzw. unteren Übertragungselement wiederum um eine obere bzw. untere Übertragungsbrücke handeln. Zwischen dem elektrischen Motor und einer Spindel des mindestens einen Spindeltriebs kann dabei eine flexible Kupplung angeordnet sein.

Alternativ ist es möglich, dass die obere Antriebseinheit mindestens einen oberen hydraulischen oder elektrohydraulischen Antrieb umfasst und/oder dass die untere Antriebseinheit mindestens einen unteren hydraulischen oder elektrohydraulischen Antrieb umfasst. Es ist dann weiter möglich, dass der obere hydraulische Antrieb mindestens einen an dem Tragelement befestigten oberen Hydraulikzylinder umfasst, und dass eine Kolbenstange des mindestens einen oberen Hydraulikzylinders direkt oder über ein oberes Übertragungselement an der oberen Stempeleinheit befestigt ist und/oder dass der untere hydraulische Antrieb mindestens einen an dem Tragelement befestigten unteren Hydraulikzylinder umfasst, und dass eine Kolbenstange des mindestens einen unteren Hydraulikzylinders direkt oder über ein unteres Übertragungselement an der unteren Stempeleinheit und/oder der Matrizeneinheit befestigt ist. Auch ist es möglich, dass der obere hydraulische Antrieb mindestens einen direkt oder über ein oberes Übertragungselement an der oberen Stempeleinheit befestigten oberen Hydraulikzylinder umfasst, wobei eine Kolbenstange des mindestens einen oberen Hydraulikzylinders an dem Tragelement befestigt ist und/oder dass der untere hydraulische Antrieb mindestens einen direkt oder über ein unteres Übertragungselement an der unteren Stempeleinheit und/oder der unteren Matrizeneinheit befestigten unteren Hydraulikzylinder umfasst, wobei eine Kolbenstange des mindestens einen unteren Hydraulikzylinders an dem Tragelement befestigt ist. Wiederum kann es sich bei dem oberen bzw. unteren Übertragungselement um eine obere bzw. untere Übertragungsbrücke handeln.

Grundsätzlich ist es denkbar, dass das Tragelement mehrteilig ausgebildet ist. Für das Tragelement ist ein geschlossenes oder offenes Profil möglich. Beispielsweise kann das Tragelement zwei getrennte Seitenteile mit jeweils einer oder mehreren Aussparungen und/oder einer oder mehreren Verstrebungen aufweisen. Gemäß einer bevorzugten Ausgestaltung ist das Tragelement einstückig ausgebildet. Dies verringert Fertigungstoleranzen. Nach einer weiteren diesbezüglichen Ausgestaltung kann das Tragelement eine U-Form besitzen, die in einer senkrecht zur Längsachse der Presse orientierten Ebene, insbesondere einer horizontalen Ebene, liegt. Mit einer solchen Ausgestaltung lassen sich die die relevanten Bauteiltoleranzen bestimmenden Flächen des Tragelements besonders präzise fertigen. Zur Erhöhung der Stabilität der U-Form können im Betrieb der Presse die Schenkel des U-förmigen Tragelements durch eine lösbare Strebe verbunden werden.

Nach einer weiteren Ausgestaltung kann die Werkzeugführungseinheit ein Modul bilden, welches als Ganzes aus der Presse entnommen und gegen eine andere ebenfalls ein Modul bildende Werkzeugführungseinheit ausgetauscht werden kann. Die Werkzeugführungseinheit bildet bei dieser Ausgestaltungen einen sogenannten Adapter, der als Ganzes aus dem Pressenrahmen entnommen und gegen eine andere Werkzeugführungseinheit ausgetauscht werden kann, beispielsweise bei Verschleiß oder einem Wechsel zu einer anderen Kombination von Matrizen- und Stempeleinheit. Die Entnahme der Werkzeugführungseinheit ist dabei besonders einfach, da sich die jeweilige Antriebseinheit erfindungsgemäß an dem Tragelement des Pressenrahmens abstützt und die Werkzeugführungseinheit nicht, wie beim Stand der Technik, von mit dem Pressenrahmen fest verbundenen Führungsstangen und von Spindeln der Antriebseinheiten durchdrungen ist.

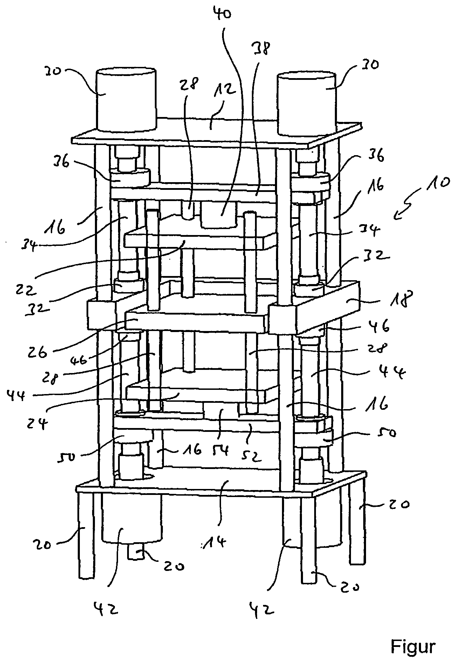

Ein Ausführungsbeispiel der Erfindung wird nachfolgend anhand einer Zeichnung näher erläutert. Die einzige Figur zeigt schematisch eine erfindungsgemäße Presse in einer perspektivischen Ansicht. Die erfindungsgemäße Presse besitzt einen Pressenrahmen 10 mit einer oberen Halteplatte 12 und einer unteren Halteplatte 14. Über in dem gezeigten Beispiel vier in vertikaler Richtung verlaufende Abstandhalter 16 sind die obere und untere Halteplatte 12, 14 miteinander und mit einem zwischen der oberen und unteren Halteplatten 12, 14 etwa mittig angeordneten Tragelement 18 verbunden. Das Tragelement 18 ist in dem gezeigten Beispiel einstückig ausgebildet und besitzt ein in einer horizontalen Ebene, einer Anordnungs- oder Erstreckungsebene, liegendes U-Profil. Die untere Halteplatte 14 steht über vier Stützbeine 20 auf dem Untergrund auf. Die erfindungsgemäße Presse besitzt darüber hinaus eine als Modul ausgebildete Werkzeugführungseinheit mit einer oberen Stempeleinheit, die aus oberen Stempelplatte 22 mit einem nicht gezeigten Oberstempel bestehen kann, einer unteren Stempeleinheit, die aus einer unteren Stempelplatte 24 mit einem nicht gezeigten Unterstempel bestehen kann, sowie einer zwischen der oberen Stempelplatte 22 bzw. oberen Stempeleinheit und der unteren Stempelplatte 24 bzw. unteren Stempeleinheit angeordneten Matrizenplatte 26 mit einer nicht gezeigten Aufnahme für durch die Ober- und Unterstempel zu verpressendes Pulver, beispielsweise Metall- oder Keramikpulver. Die obere Stempelplatte 22, die untere Stempelplatte 24 und die Matrizenplatte 26 sind in dem gezeigten Beispiel über vier vertikale Führungssäulen 28 miteinander verbunden. Die Matrizenplatte 26 ist in dem gezeigten Beispiel an dem Tragelement 18 direkt befestigt. Die Werkzeugführungseinheit 22, 24, 26, 28 ist als Ganzes aus dem Pressenrahmen 10 entnehmbar und gegen eine andere Werkzeugführungseinheit austauschbar.

Die erfindungsgemäße Presse umfasst darüber hinaus zwei obere Antriebseinheiten zum vertikalen Verfahren der oberen Stempelplatte 22 und zwei untere Antriebseinheiten zum vertikalen Verfahren der unteren Stempelplatte 24. Die oberen und unteren Antriebseinheiten sind jeweils auf zwei gegenüberliegenden Seiten des Pressenrahmens 10 angeordnet. Die oberen Antriebseinheiten umfassen jeweils einen auf der oberen Halteplatte 12 angeordneten oberen elektrischen Motor 30 und einen oberen Spindeltrieb. In dem gezeigten Beispiel ist ein oberes Festlager 32 der oberen Spindeltriebe jeweils direkt an der Oberseite des Tragelements 18 befestigt. Eine Befestigung an der Unterseite ist jedoch auch möglich. Die elektrischen Motoren 30 treiben dabei jeweils eine axial feststehende obere Spindel 34 drehend an. Auf den oberen Spindeln 34 ist jeweils eine obere Spindelmutter 36 axial beweglich angeordnet. Bei einer Drehung der oberen Spindeln 34 kommt es zu einer axialen Bewegung der jeweiligen oberen Spindelmutter 36. Die oberen Spindelmuttern 36 der oberen Antriebseinheiten sind an einer oberen Übertragungsbrücke 38 befestigt, die über ein oberes Kraftübertragungselement 40 mit der oberen Stempelplatte 22 verbunden ist. Auf diese Weise wird eine axiale Bewegung der oberen Spindelmuttern 36 auf die obere Stempelplatte 22 übertragen, so dass diese ebenfalls in axialer Richtung bewegt wird.

Der Aufbau der beiden unteren Antriebseinheiten ist insoweit identisch. So weisen die unteren Antriebseinheiten jeweils einen an der unteren Halteplatte 14 angeordneten unteren elektrischen Motor 42 auf, der jeweils eine axial feststehende untere Spindel 44 antreibt, wobei jeweils ein unteres Festlager 46 der unteren Spindeltriebe an der Unterseite des Tragelements 18 direkt befestigt ist. Auch eine Befestigung an der Oberseite ist möglich. Wiederum ist auf den unteren Spindeln 44 jeweils eine untere Spindelmutter 50 angeordnet. Die unteren Spindelmuttern 50 sind wiederum mit einer unteren Übertragungsbrücke 52 verbunden, die über ein unteres Kraftübertragungselement 54 mit der unteren Stempelplatte 24 verbunden ist. Treiben die unteren elektrischen Motoren 42 die unteren Spindeln 44 drehend an, kommt es wiederum zu einer axialen Bewegung der unteren Spindelmuttern 50, die über die untere Übertragungsbrücke 52 und das untere Kraftübertragungselement 54 auf die untere Stempelplatte 24 übertragen wird, so dass diese ebenfalls in axialer Richtung bewegt wird.

Erkennbar stützen sich die oberen Antriebseinheiten über ihre oberen Festlager 32 und die unteren Antriebseinheiten über ihre unteren Festlager 46 jeweils direkt an dem Tragelement 18 ab. Bei einem Pressvorgang erfolgt also ein Kraftfluss zwischen dem Oberstempel in die obere Stempelplatte 22, von dieser über das obere Kraftübertragungselement 40 und die obere Übertragungsbrücke 38 in die beiden oberen Antriebseinheiten, insbesondere die oberen Spindeln 34 und die oberen Festlager 32 und von diesen in das Tragelement 18. Entsprechend erfolgt ein Kraftfluss von dem Unterstempel in die untere Stempelplatte 24 und über das untere Kraftübertragungselement 54 und die untere Übertragungsbrücke 52 in die unteren Antriebseinheiten, insbesondere die unteren Spindeln 44 und die unteren Festlager 46 und von diesen wiederum in das Tragelement 18. Es befinden sich somit vergleichsweise wenige Komponenten im Kraftfluss, so dass sich auch entsprechend wenige Bauteiltoleranzen aufaddieren. Da die Anordnungsebene des Tragelements 18 in derselben horizontalen Ebene liegt wie die Matrizenplatte 26 oder in einer von dieser geringfügig beabstandeten Ebene und die vertikalen Abstandhalter 16 an dem Kraftfluss im Wesentlichen nicht teilnehmen, kommt es auch nicht zu einer erheblichen Auffederung und damit Verbiegung des Pressenrahmens 10. Darüber hinaus kann das die Presskräfte aufnehmende Tragelement 18 präzise und mit geringen Toleranzen gefertigt werden. Gleichzeitig ist ein einfacher Austausch der gesamten Werkzeugführungseinheit 22, 24, 26, 28 möglich, beispielweise bei einem Verschleiß oder einem Produktwechsel.

## Patentansprüche

1. Presse zur Herstellung eines Presslings aus pulverförmigem Material, umfassend
- einen Pressenrahmen (10) mit einer oberen und einer unteren Halteplatte (12, 14), die durch mehrere vertikale Abstandhalter (16) miteinander verbunden sind und mit mindestens einem zwischen der oberen und unteren Halteplatte (12, 14) angeordneten Tragelement (18),
- eine Werkzeugführungseinheit (22, 24, 26, 28) mit mindestens einer oberen Stempeleinheit mit mindestens einem oberen Pressstempel und/oder mit mindestens einer unteren Stempeleinheit mit mindestens einem unteren Pressstempel und mit einer Matrizeneinheit mit mindestens einer Aufnahme für durch den oberen und/oder unteren Pressstempel zu verpressendes pulverförmiges Material, wobei die Werkzeugführungseinheit (22, 24, 26, 28) an dem Tragelement (18) angeordnet ist, und wobei die Matrizeneinheit und das Tragelement (18) des Pressenrahmens (10) in derselben oder einer geringfügig voneinander beabstandeten Anordnungsebene angeordnet sind,
- mindestens eine obere Antriebseinheit zum Verfahren der oberen Stempeleinheit in vertikaler Richtung und/oder mindestens eine untere Antriebseinheit zum Verfahren der unteren Stempeleinheit und/oder der Matrizeneinheit in vertikaler Richtung, wobei die obere Antriebseinheit und/oder die untere Antriebseinheit sich im Betrieb derart an dem Tragelement (18) abstützen, dass die Reaktionskräfte, die von den beim Verpressen des pulverförmigen Materials in der mindestens einen Aufnahme erzeugten Presskräften als Aktionskräften generiert werden, in das Tragelement eingeleitet werden.

2. Presse nach einem der vorhergehenden Ansprüche, **dadurch gekennzeichnet, dass** die Matrizeneinheit an dem Tragelement (18) befestigt ist.

3. Presse nach einem der vorhergehenden Ansprüche, **dadurch gekennzeichnet, dass** die obere Antriebseinheit und/oder die untere Antriebseinheit an dem Tragelement (18) angeordnet und/oder befestigt ist.

4. Presse nach einem der vorhergehenden Ansprüche, **dadurch gekennzeichnet, dass** die obere Antriebseinheit zwischen dem Tragelement (18) und der oberen Stempeleinheit angeordnet ist und/oder dass die untere Antriebseinheit zwischen dem Tragelement (18) und der unteren Stempeleinheit oder der Matrizeneinheit angeordnet ist.

5. Presse nach einem der Ansprüche 3 oder 4, **dadurch gekennzeichnet, dass** die obere Antriebseinheit direkt oder über ein oberes Übertragungselement an der oberen Stempeleinheit befestigt ist und/oder dass die untere Antriebseinheit direkt oder über ein unteres Übertragungselement an der unteren Stempeleinheit oder der Matrizeneinheit befestigt ist.

6. Presse nach Anspruch 5, **dadurch gekennzeichnet, dass** das obere Übertragungselement eine obere Übertragungsbrücke (38) umfasst, wobei zwei obere Antriebseinheiten vorgesehen sind, die an der oberen Übertragungsbrücke (38) befestigt sind und/oder dass das untere Übertragungselement eine untere Übertragungsbrücke (52) umfasst, wobei zwei untere Antriebseinheiten vorgesehen sind, die an der unteren Übertragungsbrücke (52) befestigt sind.

7. Presse nach Anspruch 6, **dadurch gekennzeichnet, dass** zwischen der oberen Übertragungsbrücke (38) und der oberen Stempeleinheit ein oberes Kraftübertragungselement (40) angeordnet ist und/oder dass zwischen der unteren Übertragungsbrücke (52) und der unteren Stempeleinheit oder der Matrizeneinheit ein unteres Kraftübertragungselement (54) angeordnet ist.

8. Presse nach einem der vorhergehenden Ansprüche, **dadurch gekennzeichnet, dass** die obere Antriebseinheit mindestens einen durch mindestens einen elektrischen Motor (30) angetriebenen oberen Spindeltrieb umfasst und/oder dass die untere Antriebseinheit mindestens einen durch mindestens einen elektrischen Motor (42) angetriebenen unteren Spindeltrieb umfasst.

9. Presse nach Anspruch 8, **dadurch gekennzeichnet, dass** mindestens ein elektrischer Motor (30) des oberen Spindeltriebs an der oberen Halteplatte (12) des Pressenrahmens (10) befestigt ist und/oder dass mindestens ein elektrischer Motor (42) des unteren Spindeltriebs an der unteren Halteplatte (14) des Pressenrahmens (10) befestigt ist.

10. Presse nach einem der Ansprüche 8 oder 9, **dadurch gekennzeichnet, dass** ein oberes Festlager (32) einer oberen Spindel (34) mindestens eines oberen Spindeltriebs an dem Tragelement (18) befestigt ist und eine obere Spindelmutter (36) des mindestens einen oberen Spindeltriebs direkt oder über ein oberes Übertragungselement an der oberen Stempeleinheit befestigt ist und/oder dass ein unteres Festlager (46) einer unteren Spindel (44) mindestens eines unteren Spindeltriebs an dem Tragelement (18) befestigt ist und eine untere Spindelmutter (50) des mindestens einen unteren Spindeltriebs direkt oder über ein unteres Übertragungselement an der unteren Stempeleinheit und/oder der Matrizeneinheit befestigt ist.

11. Presse nach einem der Ansprüche 8 bis 10, **dadurch gekennzeichnet, dass** der mindestens eine elektrische Motor (30, 42) ein Hohlwellenmotor ist.

12. Presse nach Anspruch 11, **dadurch gekennzeichnet, dass** der Hohlwellenmotor (30, 42) an dem Tragelement (18) befestigt ist und, dass der Hohlwellenmotor eine obere Spindelmutter (36) des mindestens einen oberen Spindeltriebs antreibt, wobei eine obere Spindel (34) des mindestens einen oberen Spindeltriebs direkt oder über ein oberes Übertragungselement an der oberen Stempeleinheit befestigt ist und/oder dass der Hohlwellenmotor eine untere Spindelmutter (50) des mindestens einen unteren Spindeltriebs antreibt, wobei eine untere Spindel (44) des mindestens einen unteren Spindeltriebs direkt oder über ein unteres Übertragungselement an der unteren Stempeleinheit und/oder der Matrizeneinheit befestigt ist.

13. Presse nach Anspruch 11, **dadurch gekennzeichnet, dass** der Hohlwellenmotor (30, 42) direkt oder über ein oberes Übertragungselement an der oberen Stempeleinheit befestigt ist und eine obere Spindelmutter (36) des mindestens einen oberen Spindeltriebs antreibt, und dass eine obere Spindel (34) des mindestens einen oberen Spindeltriebs an dem Tragelement (18) befestigt ist und/oder dass der Hohlwellenmotor direkt oder über ein unteres Übertragungselement an der unteren Stempeleinheit und/oder der Matrizeneinheit befestigt ist und eine untere Spindelmutter (50) des mindestens einen unteren Spindeltriebs antreibt, und dass eine untere Spindel (44) des mindestens einen unteren Spindeltriebs an dem Tragelement (18) befestigt ist

14. Presse nach Anspruch 11, **dadurch gekennzeichnet, dass** der Hohlwellenmotor (30, 42) an dem Tragelement (18) befestigt ist und, dass der Hohlwellenmotor eine axial bewegliche obere Spindel (34) des mindestens einen oberen Spindeltriebs rotativ antreibt, und dass ein oberes Festlager (32) des mindestens einen oberen Spindeltriebs direkt oder über ein oberes Übertragungselement an der oberen Stempeleinheit befestigt ist und/oder dass der Hohlwellenmotor eine axial bewegliche untere Spindel (44) des mindestens einen unteren Spindeltriebs rotativ antreibt, und dass ein unteres Festlager (46) des mindestens einen unteren Spindeltriebs direkt oder über ein unteres Übertragungselement an der unteren Stempeleinheit und/oder der Matrizeneinheit befestigt ist.

15. Presse nach Anspruch 11, **dadurch gekennzeichnet, dass** der Hohlwellenmotor (30, 42) direkt oder über ein oberes Übertragungselement an der oberen Stempeleinheit befestigt ist und eine axial bewegliche obere Spindel (34) des mindestens einen oberen Spindeltriebs rotativ antreibt, und dass ein oberes Festlager (32) des mindestens einen oberen Spindeltriebs an dem Tragelement (18) befestigt ist und/oder dass der Hohlwellenmotor direkt oder über ein unteres Übertragungselement an der unteren Stempeleinheit und/oder der Matrizeneinheit befestigt ist und eine axial bewegliche untere Spindel (44) des mindestens einen unteren Spindeltriebs rotativ antreibt, und dass ein unteres Festlager (46) des mindestens einen unteren Spindeltriebs an dem Tragelement (18) befestigt ist.

16. Presse nach einem der vorhergehenden Ansprüche, **dadurch gekennzeichnet, dass** die obere Antriebseinheit mindestens einen oberen hydraulischen oder elektrohydraulischen Antrieb umfasst und/oder dass die untere Antriebseinheit mindestens einen unteren hydraulischen oder elektrohydraulischen Antrieb umfasst.

17. Presse nach Anspruch 16, **dadurch gekennzeichnet, dass** der obere hydraulische Antrieb mindestens einen an dem Tragelement (18) befestigten oberen Hydraulikzylinder umfasst, und dass eine Kolbenstange des mindestens einen oberen Hydraulikzylinders direkt oder über ein oberes Übertragungselement an der oberen Stempeleinheit befestigt ist und/oder dass der untere hydraulische Antrieb mindestens einen an dem Tragelement (18) befestigten unteren Hydraulikzylinder umfasst, und dass eine Kolbenstange des mindestens einen unteren Hydraulikzylinders direkt oder über ein unteres Übertragungselement an der unteren Stempeleinheit und/oder der Matrizeneinheit befestigt ist.

18. Presse nach Anspruch 16, **dadurch gekennzeichnet, dass** der obere hydraulische Antrieb mindestens einen direkt oder über ein oberes Übertragungselement an der oberen Stempeleinheit befestigten oberen Hydraulikzylinder umfasst, wobei eine Kolbenstange des mindestens einen oberen Hydraulikzylinders an dem Tragelement (18) befestigt ist und/oder dass der untere hydraulische Antrieb mindestens einen direkt oder über ein unteres Übertragungselement an der unteren Stempeleinheit und/oder der unteren Matrizeneinheit befestigten unteren Hydraulikzylinder umfasst, wobei eine Kolbenstange des mindestens einen unteren Hydraulikzylinders an dem Tragelement (18) befestigt ist.

## Claims

1. A press for producing a pellet of a powdered material, comprising
- a press frame (10) with an upper and a lower retaining plate (12, 14), which are connected to one another by several vertical spacers (16) and with at least one supporting element (18), which is disposed between the upper and the lower retaining plate (12, 14),
- a tool guiding unit (22, 24, 26, 28) with at least one upper punch unit with at least an upper press punch and/or with at least one lower punch unit with at least one lower press punch and with a die assembly with at least one holder for the powdered material, which is to be pressed by the upper and/or lower press punches, wherein the tool guiding unit (22, 24, 26, 28) is disposed at the supporting element (18), and wherein the die assembly and the supporting element (18) of the press frame (10) are disposed in the same location plane or in location planes at a slight distance from one another,
- at least one upper drive unit for moving the upper punch unit in the vertical direction and/or at least one lower drive unit for moving the lower punch unit and/or the die assembly in the vertical direction, wherein the upper drive unit and/or the lower drive unit are supported at the supporting element (18) during the operation of the press, such that the reaction forces, which are generated by the pressing forces, produced during the pressing of the powdered material in the at least one holder, are generated as action forces, are passed into the supporting element.

2. The press according to one of the preceding claims, **characterized in that** the die assembly is fastened to the supporting element (18).

3. The press according to one of the preceding claims, **characterized in that** the upper drive unit and/or the lower drive unit is disposed and/or fastened at the supporting element (18).

4. The press according to one of the preceding claims, **characterized in that** the upper drive unit is disposed between the supporting element (18) and the upper punch unit and/or that the lower drive unit is disposed between the supporting element (18) and the lower punch unit or to the die assembly.

5. The press according to one of the claims 3 or 4, **characterized in that** the upper drive unit is fastened directly or over an upper transfer element to the upper punch unit and/or that the lower drive unit is fastened directly or over a lower transfer element to the lower punch unit or to the die assembly.

6. The press according to claim 5, **characterized in that** the upper transfer element comprises an upper transfer bridge (38), wherein two upper drive units are provided, which are fastened to the upper transfer bridge (38) and/or that the lower transfer element comprises a lower transfer bridge (52), wherein two lower drive units are provided, which are fastened to the lower transfer bridge (52).

7. The press according to claim 6, **characterized in that** an upper force transfer element (40) is disposed between the upper transfer bridge (38) and the upper punch unit and/or that a lower force transfer element (54) is disposed between the lower transfer bridge (52) and the lower punch unit or to the die assembly (54).

8. The press according to one of the preceding claims, **characterized in that** the upper drive unit comprises at least one upper spindle drive, which is driven by at least one electric motor (30), and/or that the lower drive unit comprises at least one lower spindle drive, which is driven by at least one electric motor (42).

9. The press according to claim 8, **characterized in that** at least one electric motor (30) of the upper spindle drive is fastened to the upper retaining plate (12) of the press frame (10) and/or that at least one electric motor (42) of the lower spindle drive is fastened to the lower retaining plate (14) of the press frame (10).

10. The press according to one of the claims 8 or 9, **characterized in that** an upper fixed bearing (32) of an upper spindle (34) of at least one upper spindle drive is fastened to the supporting element (18) and an upper spindle nut (36) of the at least one upper spindle drive is fastened directly or over an upper transfer element at the upper punch unit and/or that a lower fixed bearing (46) of a lower spindle (44) of at least one lower spindle drive is fastened at the supporting element (18) and a lower spindle nut (50) of the at least one lower spindle drive is fastened directly or over a lower transfer element to the lower punch unit and/or to the die assembly.

11. The press according to one of the claims 8 to 10, **characterized in that** the at least one electric motor (30, 42) is a hollow shaft motor.

12. The press according to claim 11, **characterized in that** the hollow shaft motor (30, 42) is fastened to the supporting element (18) and that the hollow shaft motor drives an upper spindle nut (36) of the at least one upper spindle drive, wherein an upper spindle (34) of the at least one upper spindle drive is fastened directly or over an upper transfer element to the upper punch unit and/or that the hollow shaft motor drives a lower spindle nut (50) of the at least one lower spindle drive, wherein a lower spindle (44) of the at least one lower spindle drive is fastened directly or over a lower transfer element at the lower punch unit and/or at the die assembly.

13. The press according to claim 11, **characterized in that** the hollow shaft motor (30, 42) is fastened directly or over an upper transfer element to the upper punch unit and drives an upper spindle nut (36) of the at least one upper spindle drive, and that an upper spindle (34) of the at least one upper spindle drive is fastened to the supporting element (18) and/or that the hollow shaft motor is fastened directly or over a lower transfer element to the lower punch unit and/or to the die assembly and drives a lower spindle nut (50) of the at least one lower spindle drive, and that a lower spindle (44) of the at least one lower spindle drive is fastened to the supporting element (18).

14. The press according to claim 11, **characterized in that** the hollow shaft motor (30, 42) is fastened to the supporting element (18) and that the hollow shaft motor drives an axially movable upper spindle (34) of the at least one upper spindle drive rotatively, and that an upper fixed bearing (32) of the at least one upper spindle drive is fastened directly or over an upper transfer element to the upper punch unit and/or that the hollow shaft motor drives an axially movable lower spindle (44) of the at least one lower spindle drive rotatively, and that a lower fixed bearing (46) of the at least one lower spindle drive is fastened directly or over a lower transfer element to the lower punch unit and/or to the die assembly.

15. The press according to claim 11, **characterized in that** the hollow shaft motor (30, 42) is fastened directly or over an upper transfer element to the upper punch unit and drives an axially movable upper spindle (34) of the at least one upper spindle drive rotatively, and that an upper fixed bearing (32) of the at least one upper spindle drive is fastened to the supporting element (18) and/or that the hollow shaft motor is fastened directly or over a lower transfer element to the lower punch unit and/or the die assembly and drives an axially movable lower spindle (44) of the at least one lower spindle drive rotatively, and that a lower fixed bearing (46) of the at least one lower spindle drive is fastened to the supporting element (18).

16. The press according to one of the preceding claims, **characterized in that** the upper drive unit comprises at least one upper hydraulic or electrohydraulic drive and/or that the lower drive unit comprises at least one lower hydraulic or electrohydraulic drive.

17. The press according to claim 16, **characterized in that** the upper hydraulic drive comprises at least one upper hydraulic cylinder, which is fastened to the supporting element (18), and that a piston rod of the at least one upper hydraulic cylinder is fastened directly or over an upper transfer element to the upper punch unit and/or that the lower hydraulic drive comprises at least one hydraulic cylinder, which is fastened to the supporting element (18), and that a piston rod of the at least one lower hydraulic cylinder is fastened directly or over a lower transfer element to the lower punch unit and/or to the die assembly.

18. The press according to claim 16, **characterized in that** the upper hydraulic drive comprises at least one upper hydraulic cylinder, which is fastened directly or over an upper transfer element to the upper punch unit, wherein a piston rod of the at least one upper hydraulic cylinder is fastened to the supporting element (18) and/or **in that** the lower hydraulic drive comprises at least one lower hydraulic cylinder, which is fastened directly or over a lower transfer element to the lower punch unit and/or to the die assembly, wherein a piston rod of the at least one lower hydraulic cylinder is fastened to the supporting element (18).

## Revendications

1. Presse dévolue à la fabrication d'une pièce pressée en un matériau pulvérulent, comprenant
- un cadre de pressage (10) comportant des panneaux de maintien (12, 14) supérieur et inférieur, reliés l'un à l'autre par l'intermédiaire de plusieurs organes verticaux d'espacement (16), et au moins un élément de support (18) interposé entre lesdits panneaux de maintien (12, 14) supérieur et inférieur,
- une unité (22, 24, 26, 28) de guidage d'outils, comportant au moins une unité supérieure de poinçonnage munie d'au moins un poinçon de pressage supérieur, et/ou au moins une unité inférieure de poinçonnage dotée d'au moins un poinçon de pressage inférieur, et une unité de matriçage pourvue d'au moins un logement destiné à du matériau pulvérulent devant être pressé par le(s) poinçon(s) de pressage supérieur et/ou inférieur, ladite unité (22, 24, 26, 28) de guidage d'outils étant disposée sur ledit élément de support (18), et l'unité de matriçage et l'élément de support (18) dudit cadre de pressage (10) étant situés dans le même plan d'implantation, ou dans des plans légèrement distants l'un de l'autre,
- au moins une unité supérieure d'entraînement, conçue pour déplacer l'unité supérieure de poinçonnage dans la direction verticale, et/ou au moins une unité inférieure d'entraînement, conçue pour déplacer l'unité inférieure de poinçonnage et/ou l'unité de matriçage dans la direction verticale, sachant que ladite unité supérieure d'entraînement et/ou ladite unité inférieure d'entraînement est (sont) en appui sur l'élément de support (18), en service, de façon telle que les forces de réaction, engendrées en tant que forces actives par les forces de pressage développées lors du pressage du matériau pulvérulent dans le logement à présence minimale, soient induites dans ledit élément de support.

2. Presse selon l'une des revendications précédentes, **caractérisée par le fait que** l'unité de matriçage est fixée à l'élément de support (18).

3. Presse selon l'une des revendications précédentes, **caractérisée par le fait que** l'unité supérieure d'entraînement et/ou l'unité inférieure d'entraînement est (sont) disposée(s) sur l'élément de support (18), et/ou fixée(s) à ce dernier.

4. Presse selon l'une des revendications précédentes, **caractérisée par le fait que** l'unité supérieure d'entraînement est interposée entre l'élément de support (18) et l'unité supérieure de poinçonnage ; et/ou **par le fait que** l'unité inférieure d'entraînement est interposée entre ledit élément de support (18) et l'unité inférieure de poinçonnage, ou l'unité de matriçage.

5. Presse selon l'une des revendications 3 ou 4, **caractérisée par le fait que** l'unité supérieure d'entraînement est fixée à l'unité supérieure de poinçonnage, directement ou par l'intermédiaire d'un élément supérieur de transmission ; et/ou **par le fait que** l'unité inférieure d'entraînement est fixée à l'unité inférieure de poinçonnage ou à l'unité de matriçage, directement ou par l'intermédiaire d'un élément inférieur de transmission.

6. Presse selon la revendication 5, **caractérisée par le fait que** l'élément supérieur de transmission inclut une entretoise de transmission (38) supérieure, sachant qu'il est prévu deux unités supérieures d'entraînement fixées à ladite entretoise de transmission (38) supérieure ; et/ou **par le fait que** l'élément inférieur de transmission inclut une entretoise de transmission (52) inférieure, sachant qu'il est prévu deux unités inférieures d'entraînement fixées à ladite entretoise de transmission (52) inférieure.

7. Presse selon la revendication 6, **caractérisée par le fait qu'**un élément supérieur (40) transmetteur de forces est interposé entre l'entretoise de transmission (38) supérieure et l'unité supérieure de poinçonnage ; et/ou **par le fait qu'**un élément inférieur (54) transmetteur de forces est interposé entre l'entretoise de transmission (52) inférieure et l'unité inférieure de poinçonnage, ou l'unité de matriçage.

8. Presse selon l'une des revendications précédentes, **caractérisée par le fait que** l'unité supérieure d'entraînement inclut au moins un entraînement supérieur à broche, mené par au moins un moteur électrique (30) ; et/ou **par le fait que** l'unité inférieure d'entraînement inclut au moins un entraînement inférieur à broche, mené par au moins un moteur électrique (42).

9. Presse selon la revendication 8, **caractérisée par le fait qu'**au moins un moteur électrique (30) de l'entraînement supérieur à broche est fixé au panneau de maintien (12) supérieur du cadre de pressage (10) ; et/ou **par le fait qu'**au moins un moteur électrique (42) de l'entraînement inférieur à broche est fixé au panneau de maintien (14) inférieur dudit cadre de pressage (10).

10. Presse selon l'une des revendications 8 ou 9, **caractérisée par le fait qu'**un palier fixe supérieur (32) d'une broche supérieure (34) d'au moins un entraînement supérieur à broche est fixé à l'élément de support (18), et un écrou supérieur (36) à broche dudit entraînement supérieur à broche, à présence minimale, est fixé à l'unité supérieure de poinçonnage, directement ou par l'intermédiaire d'un élément supérieur de transmission ; et/ou **par le fait qu'**un palier fixe inférieur (46) d'une broche inférieure (44) d'au moins un entraînement inférieur à broche est fixé audit élément de support (18), et un écrou inférieur (50) à broche dudit entraînement inférieur à broche, à présence minimale, est fixé à l'unité inférieure de poinçonnage et/ou à l'unité de matriçage, directement ou par l'intermédiaire d'un élément inférieur de transmission.

11. Presse selon l'une des revendications 8 à 10, **caractérisée par le fait que** le moteur électrique (30, 42), à présence minimale, est un moteur à arbre creux.

12. Presse selon la revendication 11, **caractérisée par le fait que** le moteur (30, 42) à arbre creux est fixé à l'élément de support (18) ; et **par le fait que** ledit moteur à arbre creux entraîne un écrou supérieur (36) à broche de l'entraînement supérieur à broche, à présence minimale, une broche supérieure (34) dudit entraînement supérieur à broche à présence minimale étant fixée à l'unité supérieure de poinçonnage, directement ou par l'intermédiaire d'un élément supérieur de transmission ; et/ou **par le fait que** ledit moteur à arbre creux entraîne un écrou inférieur (50) à broche de l'entraînement inférieur à broche, à présence minimale, une broche inférieure (44) dudit entraînement inférieur à broche à présence minimale étant fixée à l'unité inférieure de poinçonnage et/ou à l'unité de matriçage, directement ou par l'intermédiaire d'un élément inférieur de transmission.

13. Presse selon la revendication 11, **caractérisée par le fait que** le moteur (30, 42) à arbre creux est fixé à l'unité supérieure de poinçonnage, directement ou par l'intermédiaire d'un élément supérieur de transmission, et entraîne un écrou supérieur (36) à broche de l'entraînement supérieur à broche à présence minimale ; et **par le fait qu'**une broche supérieure (34) dudit entraînement supérieur à broche, à présence minimale, est fixée à l'élément de support (18) ; et/ou **par le fait que** ledit moteur à arbre creux est fixé à l'unité inférieure de poinçonnage et/ou à l'unité de matriçage, directement ou par l'intermédiaire d'un élément inférieur de transmission, et entraîne un écrou inférieur (50) à broche de l'entraînement inférieur à broche à présence minimale ; et **par le fait qu'**une broche inférieure (44) dudit entraînement inférieur à broche, à présence minimale, est fixée audit élément de support (18).

14. Presse selon la revendication 11, **caractérisée par le fait que** le moteur (30, 42) à arbre creux est fixé à l'élément de support (18) ; et **par le fait que** ledit moteur à arbre creux mène en rotation une broche supérieure (34), mobile axialement, de l'entraînement supérieur à broche à présence minimale ; **par le fait qu'**un palier fixe supérieur (32) dudit entraînement supérieur à broche, à présence minimale, est fixé à l'unité supérieure de poinçonnage, directement ou par l'intermédiaire d'un élément supérieur de transmission ; et/ou **par le fait que** ledit moteur à arbre creux mène en rotation une broche inférieure (44), mobile axialement, de l'entraînement inférieur à broche à présence minimale ; et **par le fait qu'**un palier fixe inférieur (46) dudit entraînement inférieur à broche, à présence minimale, est fixé à l'unité inférieure de poinçonnage et/ou à l'unité de matriçage, directement ou par l'intermédiaire d'un élément inférieur de transmission.

15. Presse selon la revendication 11, **caractérisée par le fait que** le moteur (30, 42) à arbre creux est fixé à l'unité supérieure de poinçonnage, directement ou par l'intermédiaire d'un élément supérieur de transmission, et mène en rotation une broche supérieure (34), mobile axialement, de l'entraînement supérieur à broche à présence minimale ; et **par le fait qu'**un palier fixe supérieur (32) dudit entraînement supérieur à broche, à présence minimale, est fixé à l'élément de support (18) ; et/ou **par le fait que** ledit moteur à arbre creux est fixé à l'unité inférieure de poinçonnage et/ou à l'unité de matriçage, directement ou par l'intermédiaire d'un élément inférieur de transmission, et mène en rotation une broche inférieure (44), mobile axialement, de l'entraînement inférieur à broche à présence minimale ; et **par le fait qu'**un palier fixe inférieur (46) dudit entraînement inférieur à broche, à présence minimale, est fixé audit élément de support (18).

16. Presse selon l'une des revendications précédentes, **caractérisée par le fait que** l'unité supérieure d'entraînement inclut au moins un entraînement supérieur, hydraulique ou électrohydraulique ; et/ou **par le fait que** l'unité inférieure d'entraînement inclut au moins un entraînement inférieur, hydraulique ou électrohydraulique.

17. Presse selon la revendication 16, **caractérisée par le fait que** l'entraînement supérieur hydraulique inclut au moins un vérin hydraulique supérieur, fixé à l'élément de support (18) ; et **par le fait qu'**une tige du piston dudit vérin hydraulique supérieur à présence minimale est fixée à l'unité supérieure de poinçonnage, directement ou par l'intermédiaire d'un élément supérieur de transmission ; et/ou **par le fait que** l'entraînement inférieur hydraulique inclut au moins un vérin hydraulique inférieur, fixé audit élément de support (18) ; et **par le fait qu'**une tige du piston dudit vérin hydraulique inférieur à présence minimale est fixée à l'unité inférieure de poinçonnage et/ou à l'unité de matriçage, directement ou par l'intermédiaire d'un élément inférieur de transmission.

18. Presse selon la revendication 16, **caractérisée par le fait que** l'entraînement supérieur hydraulique inclut au moins un vérin hydraulique supérieur fixé à l'unité supérieure de poinçonnage, directement ou par l'intermédiaire d'un élément supérieur de transmission, une tige du piston dudit vérin hydraulique supérieur, à présence minimale, étant fixée à l'élément de support (18) ; et/ou **par le fait que** l'entraînement inférieur hydraulique inclut au moins un vérin hydraulique inférieur fixé à l'unité inférieure de poinçonnage et/ou à l'unité inférieure de matriçage, directement ou par l'intermédiaire d'un élément inférieur de transmission, une tige du piston dudit vérin hydraulique inférieur, à présence minimale, étant fixée audit élément de support (18).
